# EUROPÄISCHE PATENTANMELDUNG

(11) **EP 1 249 925 A2**
(43) Veröffentlichungstag der Anmeldung: **16.10.2002**
(21) Anmeldenummer: 02100359.5
(22) Anmeldetag: 10.04.2002
(51) Int. Cl.: H02M 3/335

(54) **DC-DC-Konverter**

(30) Priorität: 11.04.2001 DE 10118040
(71) Anmelder: Philips Corporate Intellectual Property GmbH, 20099 Hamburg (DE); Koninklijke Philips Electronics N.V., 5621 BA Eindhoven (NL)
(72) Erfinder: Raets, Hubert, c/o Philips Corporate Int. Prop., 52066, Aachen (DE); Deppe, Carsten, c/o Philips Corporate Int. Prop., 52066, Aachen (DE)
(74) Vertreter: Volmer, Georg, Dipl.-Ing.

(57) **Zusammenfassung**

Die Erfindung betrifft einen DC-DC-Konverter beziehungsweise ein damit gebildetes Netzteil, mit welchem eine Eingangsgleichspannung (V_{dc}) über ein resonantes Schaltnetzteil in zwei Ausgangsgleichspannungen (U1, Usb) umgewandelt werden kann. Dabei erzeugt eine Steuerschaltung (C) über eine Schaltungsstufe (M1, M2) eine erste AC-Spannung (V_{AC}), die über zwei Resonanzkreise verschiedenen Übertragungsverhaltens und zwei Gleichrichter (G1, Gsb) frequenzabhängig in Ausgangsgleichspannungen (U1, Usb) umgewandelt wird. Zur Realisierung eines Stand-by-Modus, in dem die erste Ausgangsgleichspannung (U1) sehr klein sein soll und ausgangsseitig kaum Leistung entnommen wird, ist eine zweite, schwächer ausgelegte Hilfsschaltungsstufe (M3, M4) vorgesehen, die über eine Induktivität (L2) an die Resonanzkreise gekoppelt ist. Der Stromverbrauch der Schaltung im Stand-by-Modus kann durch eine passende Dimensionierung erheblich herabgesetzt werden.

## Beschreibung

Die Erfindung betrifft einen DC-DC-Konverter zur Umsetzung einer Eingangsgleichspannung in mehrere Ausgangsgleichspannungen, der in einem Normalbetriebsmodus und einem energiesparenden Stand-by-Modus betrieben werden kann.

Insbesondere im Bereich der Unterhaltungselektronik ist es bekannt, bei der Stromversorgung zwischen einem Normalbetriebsmodus während der Benutzung eines Gerätes und einem Stand-by-Modus zu unterscheiden, wobei im Stand-by-Modus das Gerät seine eigentliche Funktion nicht ausführt, sondern lediglich bereit ist, auf ein entsprechendes Aufwecksignal zu reagieren. Für den Stand-by-Modus wird dabei eine sehr viel geringere Versorgungsleistung benötigt als für den Normalbetrieb. Vorteilhafterweise wird daher in solchen Geräten ein Netzteil mit einem DC-DC-Konverter eingesetzt, der mindestens zwei Ausgangsspannungen liefert, die zwischen einem Normalbetriebsmodus und einem Stand-by-Modus umgsschaltet werden können. Die erste Ausgangsspannung dient dabei der Versorgung der Hauptelektronik des Gerätes, während die andere Spannung nur Stand-by-Schaltungen versorgt. Im Stand-by-Modus ist die erste Ausgangsspannung üblicherweise auf Null oder einen sehr geringen Wert herabgesetzt, während sich die zweite Ausgangsspannung zwischen Normalbetriebsmodus und Stand-by-Modus nicht oder nur unwesentlich ändert.

Vor diesem Hintergrund war es Aufgabe der vorliegenden Erfindung, einen DC-DC-Konverter und ein Netzteil der genannten Art bereitzustellen, bei denen die im Betrieb entstehenden Verluste möglichst klein sind

Diese Aufgabe wird durch ein DC-DC-Konverter nach Anspruch 1 und ein Netzteil nach Anspruch 9 gelöst. Vorteilhafte Ausgestaltungen sind in den Unteransprüchen enthalten.

Der DC-DC-Konverter dient der Umsetzung einer Eingangsgleichspannung, die zum Beispiel durch Gleichrichtung einer Netzwechselspannung erzeugt werden kann, in mehrere Ausgangsgleichspannungen, von denen typischerweise eine die Hauptelektronik eines elektronischen Gerätes und eine andere eine Stand-by-Elektronik des Gerätes versorgt.

Der Konverter enfhält
- eine Hauptschaltungsstufe mit Schaltelementen zur Umwandlung der am Eingang der Hauptschaltungsstufe anliegenden Eingangsgleichspannung in eine erste AC-Spannung (Wechselspannung), welche über die Ausgänge der Hauptschaltungsstufe an zwei Übergabeknotenpunkten geleitet wird;
- eine Hilfsschaltungsstufe mit Hilfsschaltelementen und einer Hilfsinduktivität zur Umwandlung der an den Eingängen der Hilfsschaltungsstufe anliegenden Eingangsgleichspannung in eine zweite AC-Spannung, die über die Ausgänge der Hilfsschaltungsstufe an die zwei genannten Übergabeknotenpunkten geleitet wird;
- einen ersten Resonanzkreis zur Umsetzung der an den Übergabeknotenpunkten anliegenden AC-Spannungen in eine erste AC-Ausgangsspannung die zur Erzeugung einer ersten Ausgangsgleichsspannung mit Hilfe eines ersten Gleichrichters dient;
- einen zweiten Resonanzkreis zur Umsetzung der an den Übergabeknotenpunkten anliegenden AC-Spannungen in eine zweite AC-Ausgangsspannung, die zur Erzeugung einer zweiten Ausgangsgleichsspannung mit Hilfe eines zweiten Gleichrichters dient, sowie
- eine Steuerschaltung zur Ansteuerung der Hauptschaltungsstufe und der Hilfsschaltungsstufe.

Durch eine entsprechende Ansteuerung der Hauptschaltungsstufe beziehungsweise der Hilfsschaltungsstufe über die Steuerschaltung kann die an den Schaltungsstufen anliegende Eingangsgleichspannung in eine impulsförmige Wechselspannung mit bestimmter Frequenz und bestimmtem Abtastverhältnis umgewandelt werden. Diese AC-Spannung wird dann den beiden Resonanzkreisen zugeführt, welche sie je nach Lage ihrer Resonanzfrequenz in entsprechend große Ausgangsgleichspannungen umwandeln. Die Höhe jeder Ausgangsgleichspannung kann somit über die Frequenz der eingespeisten AC-Spannung variiert werden, das heißt über die Frequenz, mit welcher die Steuerschaltung die Schaltungsstufen betätigt.

Die Verwendung zweier Schaltungsstufen, der Hauptschaltungsstufe und der Hilfsschaltungsstufe, hat dabei den Vorteil, dass diese Schaltungsstufen für jeweils verschiedene Modi zum Betrieb des DC-DC-Konverters optimal ausgelegt werden können. Hierdurch ist es insbesondere möglich, die verschiedenen Modi besonders energieeffizient auszulegen.

Dabei wird die Hilfsschaltungsstufe vorzugsweise für geringere Leistungsaufnahmen als die Hauptschaltungsstufe ausgelegt. Die Hilfsschaltungsstufe lässt sich somit vorteilhaft in einer Betriebsart des DC-DC-Konverters einsetzen, in welcher ausgangsseitig geringere Leistungen gefordert sind. Eine solche Betriebsart kann insbesondere dem Stand-by-Modus eines elektronischen Gerätes entsprechen.

Die Hilfsschaltungsstufe und die Steuerschaltung können gemäß einer bevorzugten Ausgestaltung gemeinsam als eine integrierte Schaltung ausgebildet sein. Dies ist insbesondere dann möglich, wenn die Hilfsschaltungsstufe für geringere Lasten auszulegen ist, so dass sie sich problemlos als integrierte Schaltung verwirklichen lässt.

Vorteilhafterweise ist die Steuerschaltung so eingerichtet oder programmiert, dass sie wahlweise in einem Normalbetriebsmodus oder in einem Stand-by-Modus betrieben werden kann. Im Normalbetriebsmodus steuert sie die Hauptschaltungsstufe so an, dass diese eine erste AC-Spannung in einem ersten Frequenzbereich Df1 erzeugt, während sie im Stand-by-Modus die Hilfsschaltungsstufe so ansteuert, dass diese eine zweite AC-Spannung in einem zweiten Frequenzbereich Df2 erzeugt. Dabei sind die Hilfsschaltungsstufe im Normalbetriebsmodus und die Hauptschaltungsstufe im Stand-by-Modus jeweils unbenutzt beziehungsweise so angesteuert, dass sie keine Ausgangsspannungen erzeugen. Die generierten Ausgangsspannungen aus dem ersten Frequenzbereich beziehungsweise dem zweiten Frequenzbereich werden wie oben erläutert über die Resonanzkreise und Gleichrichter in Ausgangsgleichspannungen verschiedener Größe umgesetzt. Vorteilhaft ist dabei, dass in einem Stand-by-Modus mit einem geringeren ausgangsseitigen Leistungsverbrauch die notwendige AC-Spannung auf der Eingangsseite der Resonanzkreise durch eine passend dimensionierte (das heißt vorzugsweise schwächere) Schaltungsstufe erzeugt werden kann. Hierdurch sinkt die Ansteuerungsleistung und damit der Stromverbrauch des DC-DC-Konverters im Stand-by-Betrieb.

Zur Potentialtrennung zwischen den Spannungen an den Übergabeknotenpunkten und den Ausgängen der Resonanzkreise kann ein Transformator vorgesehen sein mit einer beiden Resonanzkreisen zugeordneten ersten Primärwicklung, einer dem ersten Resonanzkeis zugeordneten ersten Sekundärwicklung sowie einer dem zweiten Resonanzkreis zugeordneten zweiten Sekundärwicklung. Weiterhin kann der Transformator eine zweite Primärwicklung aufweisen, welche die Hilfsinduktivität der Hilfsschaltungsstufe bildet. Auf diese Weise erübrigt sich das Vorsehen eines zusätzlichen separaten Bauteiles zur Realisierung der Hilfsinduktivität.

Die Hauptschaltungsstufe kann alternativ als eine zwei Schaltelemente aufweisende Halbbrückenschaltung oder eine vier Schaltelemente aufweisende Vollbrückenschaltung ausgebildet sein. Die Hilfsschaltungsstufe wird vorzugsweise durch eine zwei Schaltelemente enthaltende Halbbrückenschaltung gebildet.

Neben dem ersten Resonanzkreis kann der DC-DC-Konverter einen oder mehrere weitere Ausgangskreise enthalten, die weitere Hauptausgänge bereitstellen. In den weiteren Ausgangskreisen erfolgt eine Umsetzung der an den Übergabeknotenpunkten anliegenden AC-Spannungen in AC-Ausgangsspannungen, die zur Erzeugung der weiteren Ausgangsgleichspannungen dienen.

Die Erfindung betrifft weiterhin ein Netzteil, welches dadurch gekennzeichnet ist, dass es einen DC-DC-Konverter der oben beschriebenen Art enthält. Ein solches Netzteil ist in besonders stromsparender Weise zwischen einem Normalbetriebsmodus zur normalen Stromversorgung eines elektronischen Gerätes und einem Stand-by-Modus zur Versorgung des Gerätes mit reduzierter Leistung geeignet.

Im Folgenden wird die Erfindung mit Hilfe der Figuren beispielhaft erläutert. Es zeigt:
- Fig. 1: das Schaltbild eines erfindungsgemäßen DC-DC-Konverters vom LCC-Typ;
- Fig. 2: die Übertragungsfunktionen der Resonanzkreise des DC-DC-Konverters.

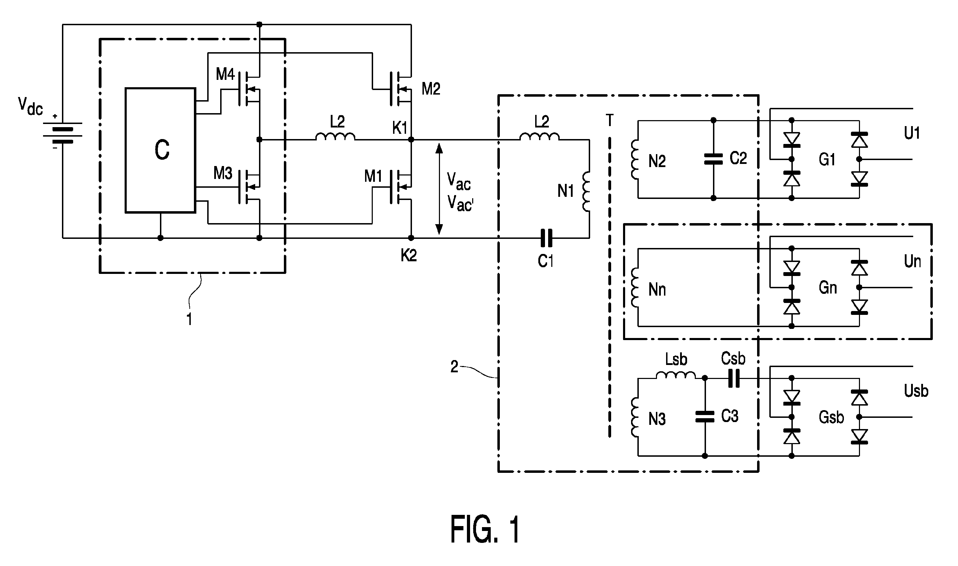

In Figur 1 ist eine bevorzugte Ausgestaltung des erfindungsgemäßen DC-DC-Konverters in einem Schaltbild dargestellt. Der DC-DC-Konverter wandelt eine Eingangsgleichspannung V_{dc} in zwei Ausgangsgleichspannungen U1 und Usb um. Die erste Ausgangsspannung U1 kann dabei insbesondere der Versorgung der Hauptelektronik eines Gerätes wie zum Beispiel eines TV-Gerätes (Monitors) dienen. Die zweite Ausgangsspannung Usb wird dagegen vorzugsweise zur Versorgung von einer Stand-by-Elektronik des Gerätes verwendet und ist deshalb in der Regel deutlich kleiner beziehungsweise leistungsschwächer als die Ausgangsspannung U1. Weiterhin sollte der DC-DC-Konverter zwischen einem Normalbetriebsmodus und einem Stand-by-Modus umschaltbar sein, wobei im Stand-by-Modus die Spannung U1 zumindest annähernd gleich Null sein soll.

Das oben skizzierte Verhalten der Schaltung wird bei möglichst geringer Leistungsaufnahme durch den nachfolgend erläuterten Aufbau erzielt.

Die Eingangsspannung V_{dc} wird zunächst über eine Hauptschaltungsstufe geleitet, welche vorliegend als Halbbrückenschaltung mit den in Reihe liegenden Schaltelementen M1 und M2 realisiert ist. Die Schaltelemente können insbesondere durch MOS-Feldeffekttransistoren gebildet werden. Sie werden über eine Steuerschaltung C, die insbesondere als integrierte Schaltung ausgebildet sein kann, angesteuert, das heißt geöffnet und geschlossen. Durch ein entsprechend getaktetes Öffnen und Schließen der Schaltelemente kann dabei an den Knotenpunkt K1, der zwischen den beiden Schaltelementen M1 und M2 liegt, sowie den Knotenpunkt K2, der zwischen dem Schaltelement M1 und einem Pol der Eingangsspannung V_{dc} liegt, die Eingangsspannung V_{dc} impulsförmig zerhackt mit einer vorgebbaren Frequenz und einem einstellbaren Abtastverhältnis (Verhältnis der Zeiten mit und ohne anliegende Spannung V_{dc}) angelegt werden. Auf diese Weise entsteht zwischen den beiden Knotenpunkten K1 und K2 eine erste AC-Spannung V_{AC}.

Die an den Knotenpunkten K1 und K2 anliegende AC-Spannung wird von einem sogenannten resonanten Konverter 2 mit zwei verschiedenen Resonanzkreisen in zwei AC-Ausgangsspannungen umgewandelt, welche jeweils über einen Gleichrichter G1 beziehungsweise Gsb in die Ausgangsgleichspannungen U1 und Usb umgewandelt werden. Der resonante Konverter 2 ist eingangsseitig mit den beiden Knotenpunkten K1 und K2 verbunden. Vom ersten Knotenpunkt K1 führt diese Verbindung über eine erste Induktivität L1 und die Primärwicklung eines Transformators T (Wicklungszahl N1) sowie einen Kondensator C1 zurück zum zweiten Knotenpunkt K2.

Die so primärseitig in den Transformator T eingespeiste Spannung wird - galvanisch entkoppelt - auf der Sekundärseite von zwei Sekundärwicklungen mit den Wicklungszahlen N2 beziehungsweise N3 abgegriffen. Im ersten Resonanzkreis mit der Sekundärwicklung N2 ist dabei parallel zur Sekundärwicklung ein Kondensator C2 geschaltet, dessen Spannung von dem bereits erwähnten Gleichrichter G1 abgegriffen und zur ersten Ausgangsgleichspannung U1 umgewandelt wird. Beim zweiten Resonanzkreis sind parallel zur Sekundärwicklung N3 eine Spule Lsb und ein Kondensator Csb geschaltet. Die Spannung am Kondensator Csb wird über einen optionalen weiteren Kondensator C3 vom Gleichrichter Gsb abgegriffen und in die zweite Ausgangsgleichspannung Usb umgewandelt.

Neben den Sekundärwicklungen N2 und N3 können noch beliebig viele weitere Sekundärwicklungen vorgesehen sein, über die ein Abgriff für weitere Hauptausgänge erfolgt. Stellvertretend hierfür ist in Figur 1 eine weitere Wicklung Nn dargestellt, die einem Gleichrichter Gn Wechselspannung zur Erzeugung der Ausgangsgleichspannung Un zuführt. Das Verhalten des Hauptausganges Un entspricht weitgehend demjenigen des Ausganges U1. Allerdings ist im zweiten Ausgangskreis kein Kondensator nötig, der dem Kondensator C2 entsprechen würde. Ebenso ist es erlaubt, den Kondensator C2 in geeigneter Weise (z.B. als parasitäre Kapazität über die Wicklungen N2, ... Nn) zu verteilen.

Der beschriebene und in Figur 1 dargestellte Aufbau der Resonanzkreise aus Induktivitäten und Kondensatoren wird auch als LCC-Konverter bezeichnet, da für seine Hauptfunktion die Bauteile L1, C1 und C2 wirken, während die Induktivität Lh des Transformators N1, ... Nn vernachlässigbar ist. Der Aufbau stellt nur ein mögliches Beispiel dar und kann vom Fachmann in vielerlei Hinsicht abgewandelt werden. Häufig verwendet werden auch LLC-Konverter (Induktivität Lh des Transformators N1, ... Nn mit großem Einfluss, C2 vernadhlässigbar), LC-Konverter (nur L1 und C1 wichtig) und LLCC-Konverter (L1, Lh, C1 und C2 wichtig). Entscheidend ist nur, dass eine an den Knotenpunkten K1 und K2 anliegende AC-Spannung V_{AC} mit einem bestimmten, frequenzabhängigen Übertragungsverhalten ausgangsseitig in AC-Spannungen umgewandelt wird, die dann weiter in die Ausgangsgleichspannungen U1 beziehungsweise Usb umgewandelt werden können.

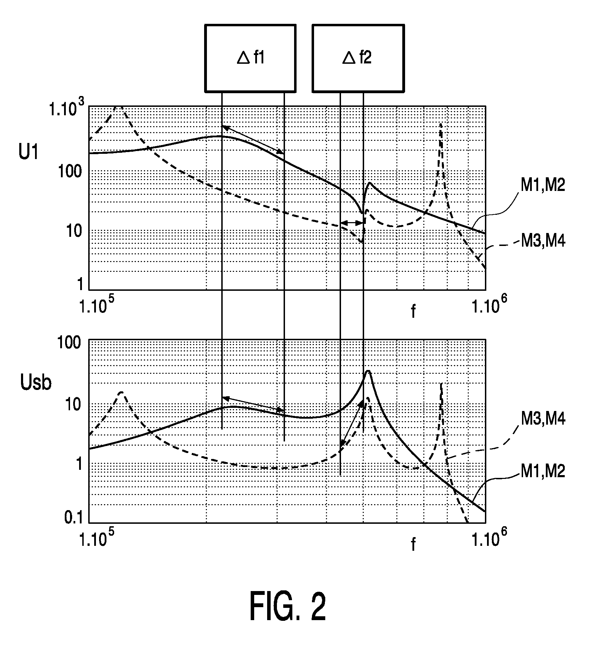

Das frequenzabhängige Übertragungsverhalten der Resonanzkreise im Normalbetriebsmodus ist in Figur 2 mit durchgezogenen Linien dargestellt. Im oberen Diagramm ist dabei die Verstärkung (vertikale Achse) des ersten Resonanzkreises, welcher die Ausgangsgleichspannung U1 erzeugt, in Abhängigkeit von der Frequenz f (horizontale Achse) der an den Knotenpunkten K1 und K2 eingespeisten AC-Spannung dargestellt. Entsprechend ist im unteren Diagramm die Verstärkung des zweiten Resonanzkreises, welcher der Erzeugung der Ausgangsgleichspannung Usb dient, in Abhängigkeit von der Frequenz der Eingangsspannung dargestellt.

Weiterhin sind in den Diagrammen die Frequenzbereiche Df1 und Df2 eingezeichnet, in denen der DC-DC-Konverter vorzugsweise betrieben wird. Dabei ist erkennbar, dass die erste Ausgangsgleichspannung U1 im ersten Frequenzbereich Df1 sehr viel größer ist als im zweiten Frequenzbereich Df2. Die zweite Ausgangsgleichspannung Usb ist dagegen in beiden Frequenzbereichen Df1 und Df2 etwa gleich groß und im Vergleich kleiner als die erste Ausgangsgleichspannung U1. Durch die Umschaltung des DC-DC-Konverters zwischen den beiden Frequenzbereichen Df1 und Df2 kann somit die erste Ausgangsgleichspannung U1 bei etwa gleichbleibender zweiter Ausgangsgleichspannung Usb quasi an- und abgeschaltet werden. Der zweite Frequenzbereich Df2 entspricht daher bei einer typischen Verwendung des Konverters dem Stand-by-Modus eines damit betriebenen Gerätes.

Bislang wurde noch nicht auf die Funktion der Hilfsschaltelemente M3 und M4 der Schaltung nach Figur 1 eingegangen. Die eine Halbbrückenschaltung bildenden, in Reihe liegenden Hilfsschaltelemente M3 und M4 dienen der Verwirklichung einer Hilfsschaltungsstufe, die parallel zur Hauptschaltungsstufe (Schaltelemente M1 und M2) an der Eingangsgleichspannung V_{dc} liegt. Die Hilfsschaltelemente M3 und M4 sind hinsichtlich der Lastungsaufnahme schwächer ausgelegt als die Schaltelemente M1 und M2 der Hauptschaltungsstufe und können daher zusammen mit der Steuerschaltung C auf einem gemeinsamen Chip 1 integriert ausgebildet sein.

Der Mittelpunkt zwischen den beiden Hilfsschaltelementen M3 und M4 ist über eine Induktivität L2 mit dem Knotenpunkt K1 verbunden. Zusätzlich oder alternativ zur Induktivität L2 können auch weitere Windungen des Transformators T vorgeschaltet sein. Der andere Anschluss des Hilfsschaltelementes M3 ist mit dem anderen Knotenpunkt K2 (und einem Pol der Eingangsspannungsquelle) verbunden. Mit der Hilfsschaltungsstufe aus den Hillsschaltelementen M3 und M4 kann auf der Eingangsseite des DC-DC-Konverters eine Stromersparnis im Stand-by-Modus, in welchem ausgangsseitig eine geringe Leistung entnommen wird, erzielt werden.

Während des Betriebs wird im Stand-by-Modus oder je nach Dimensionierung auch im Schwachlastbetrieb die Hauptschaltungsstufe M1, M2 von der Steuerschaltung C deaktiviert (beide Schaltelemente M1 und M2 werden geöffnet), und statt dessen wird die Hilfsschaltungsstufe M3, M4 angesteuert. Durch die unterschiedliche Dimensionierung der Schaltelemente M3 und M4 sowie die zwischengeschaltete Induktivität L2 entsteht dabei ein anderes Übertragungsverhalten des Konverters, welches für den benötigten Arbeitspunkt optimiert werden kann.

Das sich bei Ansteuerung der Hilfsschaltungsstufe M3, M4 einstellende Übertragungsverhalten ist in Figur 2 als gestrichelte Kurve in den Diagrammen eingezeichnet. Wie oben erläutert wurde, wird im Normalbetriebsmodus des DC-DC-Konverters über die Hauptschaltungsstufe M1, M2 an den Knotenpunkten K1 und K2 eine AC-Spannung im ersten Frequenzbereich Df1 erzeugt, so dass an den Ausgängen des Konverters eine hohe Ausgangsgleichspannung U1 und eine kleinere Ausgangsgleichspannung Usb abgegeben werden, die in Figur 2 durch die Doppelpfeile im Frequenzbereich Df1 gekennzeichnet sind

Bei der Umschaltung der Steuerschaltung C in den Stand-by-Modus öffnet diese die Hauptschaltungsstufe (M1, M2) und steuert statt dessen die Hilfsschaltungsstufe (M3, M4) mit einer Frequenz aus dem Bereich Df2 an. Die zugehörigen Ausgangsgleichspannungen finden sich in den Diagrammen von Figur 2 auf der gestrichelten Kurve, die zur Hilfsschaltungsstufe gehört, wieder. Sie sind im Frequenzbereich Df2 wiederum durch Doppelpfeile gekennzeichnet, wobei ersichtlich ist, dass die Ausgangsgleichspannung U1 sehr viel geringer ist als im Normalbetriebsmodus, und dass die Ausgangsgleichspannung Usb etwa gleich groß wie im Normalbetriebsmodus ist.

Durch die Anpassung des Konverters im Stand-by-Betrieb kann eine erheblich geringere Leistungsaufnahme erreicht werden, und die Bauelemente im Stand-by-Kreis können kleiner und preiswerter dimensioniert werden. Die Verbesserung des Leistungsverbrauchs im Stand-by-Betrieb entsteht dabei im Wesentlichen durch:
- die Reduzierung der Ansteuerungsleistung;
- die Verringerung der zirkulierenden Blindleistung;
- die Absenkung des Stroms in Primär- und Sekundärwicklungsn des Transformators T sowie im Stand-by-Resonanzkreis.

Wegen der erheblich kleineren Ströme in der Sekundärwicklung N3 des zweiten Resonanzkreises während des Stand-by-Betriebs sind dabei wesentliche Einsparungen möglich durch Verwendung einfachster Bauelemente im zweiten Resonanzkreis und die Verwendung dünneren Drahtes für diese Wicklung. Weitere Einsparungen ergeben sich wegen des erheblich kleineren Primärstromes im Stand-by-Modus durch die vollständige Integration der zusätzlich benötigten Komponenten auf der Primärseite. Das heißt, dass die Induktivität L2 in dem Transformator T integriert sein kann, wobei es zusätzlich möglich ist, im Stand-by-Modus die Windung N1 zu ändern Bei entsprechender Dimensionierung wird der Stromfluss im Stand-by-Modus sogar so klein, dass die Halbbrücke aus M3 und M4 auf dem Chip der Steuerschaltung C integriert werden kann.

Die Resonanz des zweiten Resonanzkreises für die Ausgangsspannung Usb kann geringere Güte haben, wodurch der mögliche Regelbereich im Stand-by-Modus größer wird. Die Spannung Usb kann daher genau eingestellt werden.

Aufgrund der kleineren Halbbrücke mit den Schaltelementen M3 und M4 wird die benötigte Ansteuerleistung (für die Gate-Ladungen) minimal. Eine Reduktion des Stromes um den Faktor 4,5 ermöglicht die Verwendung von Feldeffekttransistoren für M3 und M4 mit einem 20-fachen Widerstand (4,5²). Diese weisen in etwa ein 20-tel der Eingangskapazität auf. Die zur Ansteuerung benötigte Leistung ist dementsprechend nur noch ein 20-tel und bleibt auch bei hohen Frequenzen bei minimalen Werten (< 20 mW). Durch die erfindungsgemäße Schaltung kann bei verringerten Kosten der Stand-by-Verbrauch der Schaltung von derzeit 3 W auf 1 W gesenkt werden.

Das anhand der Figuren für die Halbbrückenschaltung aus M1 und M2 beschriebene Prinzip kann auch bei Vollbrückenschaltungen für die Hauptschaltungsstufe verwendet werden.
Dabei findet der Einsatz von drei Halbbrücken statt (zwei große für die Hauptschaltungsstufe und eine Hilfsbrücke), und die Regelung der verschiedenen Eingangsspannungen erfolgt über die Frequenz.

### BEZUGSZEICHENLISTE

- 1: Chip mit Steuerschaltung und Hilfsschaltungsstufe
- 2: Resonanzkreise
- C: Steuerschaltung
- C1, C2, C3, Cn, Csb: Kondensatoren
- G1, Gn, Gsb: Gleichrichter
- K1, K2: Übergabeknotenpunkte
- L1, Lsb: Induktivitäten
- L2: Hilfsinduktivität
- M1, M2: Schaltelemente
- M3, M4: Hilfsschaltelemente
- N1, N2, N3, Nn: Wicklungen
- T: Transformator
- U1, Un: Ausgangsgleichspannung für Normalbetrieb
- Usb: Ausgangsgleichspannung für Stand-by-Betrieb
- V_{AC}, V_{AC}': AC-Spannungen
- V_{dc}: Eingangsgleichspannung

## Patentansprüche

1. DC-DC-Konverter zur Umsetzung einer Eingangsgleichspannung (V_{dc}) in mehrere Ausgangsgleichspannungen, mit
- einer Schaltelemente (M1, M2) aufweisenden Hauptschaltungsstufe zur Umwandlung der Eingangsgleichspannung (V_{dc}) in eine erste AC-Spannung (V_{AC}) an zwei Übergabeknotenpunkten (K1, K2),
- einer Hilfaschaltelemente (M3, M4) und eine Hilfsinduktivität (L2) aufweisenden Hilfsschaltungsstufe zur Umwandlung der Eingangsgleichspannung (V_{dc}) in eine zweite AC-Spannung (V_{AC}') an den zwei Übergabeknotenpunkten (K1, K2),
- einem ersten Resonanzkreis (L1, N1, C1, N2, C2) zur Umsetzung der an den Übergabeknotenpunkten (K1, K2) anliegenden AC-Spannungen (V_{AC}; V_{AC}') in eine erste AC-Ausgangsspannung, die zur Erzeugung einer ersten Ausgangsgleichspannung (U1) dient,
- einem zweiten Resonanzkreis (L1, N1, C1; N3, Lsb, Csb, C3) zur Umsetzung der an den Übergabeknotenpunkten (K1 K2) anliegsnden AC-Spannungen (V_{AC}; V_{AC}') in eine zweite AC-Ausgangsspannung die zur Erzeugung einer zweiten Ausgangsgleichspannung (Usb) dient,
- einer Steuerschaltung (C) zur Ansteuerung der Hauptschaltungsstufe und der Hilfsschaltungsstufe.

2. DC-DC-Konverter nach Anspruch 1,
**dadurch gekennzeichnet,**
**dass** die Hilfsschaltungsstufe für geringere Leistungsaufnahmen als die Hauptschaltungsstufe ausgelegt ist.

3. DC-DC-Konverter nach Anspruch 1 oder 2,
**dadurch gekennzeichnet,**
**dass** die Schaltelemente (M3, M4) der Hilfsschaltungsstufe und die Steuerschaltung (C) eine integrierte Schaltung (1) bilden.

4. DC-DC-Konverter nach mindestens einem der Ansprüche 1 bis 3,
**dadurch gekennzeichnet,**
**dass** die Steuerschaltung (C) so eingerichtet ist, dass sie in einem Normalbetriebsmodus nur über die Hauptschaltungsstufe (M1, M2) eine erste AC-Spannung (V_{AC}) in einem ersten Frequenzbereich (Df1) und in einem Stand-by-Modus nur über die
Hilfsschaltungsstufe (M3, M4) eine zweite AC-Spannung (V_{AC}') in einem zweiten Frequenzbereich (Df2) erzeugt.

5. DC-DC-Konverter nach mindestens einem der Ansprüche 1 bis 4,
**dadurch gekennzeichnet,**
**dass** ein eine Potentialtrennung zwischen den Übergabeknotenpunkten (K1, K2) und der ersten und zweiten AC-Ausgangsspannung bewirkender Transformator (T) vorgesehen ist, der eine beiden Resonanzkreisen zugeordnete Primärwicklung (N1), eine dem ersten Resonanzkreis zugeordnete erste Sekundärwicklung (N2) sowie eine dem zweiten Resonanzkreis zugeordnete zweite Sekundärwicklung (N3) aufweist.

6. DC-DC-Konverter nach Anspruch 5,
**dadurch gekennzeichnet,**
**dass** die Hilfsinduktivität zumindest teilweise von einer Primärwicklung des Transformators (T) gebildet wird

7. DC-DC-Konverter nach mindestens einem der Ansprüche 1 bis 6,
**dadurch gekennzeichnet,**
**dass** die Hauptschaltungsstufe zur Unwandlung der Eingangsgleichspannung (V_{dc}) in die erste AC-Spannung (VAC) eine zwei Schaltelemente (M1, M2) aufweisende Halbbrückenschaltung oder eine vier Schaltelemente aufweisende Vollbrückenschaltung enthält.

8. DC-DC-Konverter nach mindestens einem der Ansprüche 1 bis 7,
**dadurch gekennzeichnet,**
**dass** die Hilfsschaltungsstufe eine zwei Schaltelemente (M3, M4) aufweisende Halbbrückenschaltung enthält.

9. DC-DC-Konverter nach mindestens einem der Ansprüche 1 bis 8,
**dadurch gekennzeichnet,**
**dass** er mindestens einen weiteren Ausgangskreis (L1, N1, C1, Nn) zur Umsetzung der an den Übergabeknotenpunkten (K1 K2) anliegenden AC-Spannungen (V_{AC}; V_{AC}') in eine weitere AC-Ausgangsspannung, die zur Erzeugung einer weiteren Ausgangsgleichspannung (Un) dient, enthält.

10. Netzteil mit einem DC-DC-Konverter nach einem der Ansprüche 1 bis 9.
